Europäisches Patentamt

European Patent Office

Office européen des brevets

(11) Veröffentlichungsnummer: **0 371 239**

**A1**

## EUROPÄISCHE PATENTANMELDUNG

(21) Anmeldenummer: 89119117.3

(22) Anmeldetag: **14.10.89**

(51) Int. Cl.⁵: **A62D 3/00, H01F 27/14, B01D 53/34**

Die Bezeichnung der Erfindung wurde geändert (Richtlinien für die Prüfung im EPA, A-III, 7.3).

(30) Priorität: **31.10.88 CH 4044/88**

(43) Veröffentlichungstag der Anmeldung: **06.06.90 Patentblatt 90/23**

(84) Benannte Vertragsstaaten: **AT CH DE FR GB IT LI NL SE**

(71) Anmelder: **ASEA BROWN BOVERI AG Haselstrasse CH-5401 Baden(CH)**

(72) Erfinder: **Hirth, Michael, Dr. Bündtenweg 9 CH-5507 Mellingen(CH)** Erfinder: **Schmidl, Erwin, Dr. Zelglistrasse 4 CH-5442 Fislisbach(CH)**

(54) **Verfahren und Vorrichtungen zum Entfernen von chlorierte organische Verbindungen enthaltender Flüssigkeit aus flüssigkeitsgetränkten Bestandteilen eines Gerätes.**

(57) Mit dem Verfahren sollen chlorierte organische Verbindungen, wie beispielsweise PCBs, aus schwer zugänglichen Bestandteilen (Kern 3) von Geräten, welche wie Transformatoren solche Verbindungen als Oelfüllung enthalten, in kostengünstiger und dennoch umweltverträglicher Weise entfernt werden.

Dies wird durch Freisetzung der chlorhaltigen Verbindungen in Gegenwart eines das Chlor in Form eines Alkali- und/oder Erdalkalichlorids bindenden Reaktionspartners erreicht. Damit werden in ausserordentlich umweltverträglicher und wirtschaftlicher Weise die metallischen Bestandteile der Geräte einem Recycling zugänglich.

FIG.1

EP 0 371 239 A1

**Verfahren zum Entfernen von chlorierte organische Verbindungen enthaltender Flüssigkeit aus flüssigkeitsgetränkten Bestandteilen eines Gerätes und Vorrichtungen zur Durchführung dieses Verfahrens.**

### TECHNISCHES GEBIET

Bei der Erfindung wird ausgegangen von einem Verfahren gemäss dem Oberbegriff von Patentanspruch 1. Die Erfindung betrifft auch Vorrichtungen zur Durchführung des Verfahrens.

### STAND DER TECHNIK

Ein Verfahren der eingangs genannten Art ist beispielsweise aus der DE-A-2,756,298 und der US-A-4,699,667 bekannt. Mit dem bekannten Verfahren sollen aus Transformatoren die nach Ablassen von Isolierflüssigkeit auf der Basis polychlorierter Biphenyle (PCB) in schwer zugänglichen Bestandteilen, wie etwa organischen Isolierstoffen auf der Basis von Holz, Papier, Baumwolle oder Kunststoff, verbleibenden restlichen polychlorierten Biphenyle entfernt werden. Hierzu werden die mit den Biphenylen getränkten Bestandteile in einem Autoklaven bei erhöhten Temperaturen mit dem Dampf eines Lösungsmittels, wie Wasser oder Methanol, behandelt und ein dabei entstehendes gasförmiges azeotropes Gemisch aus Lösungsmittel und Biphenylen aus dem Autoklaven ausgetragen und unter Bildung einer die restlichen Biphenyle enthaltenden Flüssigkeit abgekühlt.Aus dieser Flüssigkeit werden dann die Biphenyle nachfolgend bevorzugt durch Bestrahlung mit UV-Licht oder durch Zugabe von Ozon zerstört. Abhängig vom verwendeten Lösungsmittel können die Biphenyle aber auch durch Zugabe von metallischem Natrium zerstört werden. Der vorstehend beschriebene Lösungs- und Austragzyklus muss mehrfach wiederholt werden, um die Biphenyle wenigstens in einigermassen zufriedenstellender Weise aus den biphenylgetränkten Bestandteilen zu entfernen. Ein solches Verfahren ist daher äusserst langwierig. Zudem lassen sich hierdurch die Biphenyle nicht vollständig entfernen. Bedingt durch die Formgebung der Bestandteile kann nämlich häufig selbst dampfförmiges Lösungsmittel nicht an alle Stellen der biphenylgetränkten Bestandteile gelangen.

Es ist ferner vorgeschlagen worden, zur Entfernung von polychlorierten Biphenylen aus Transformatoren, den gesamten Transformator durch Schreddern zu zerkleinern und das hierbei gebildete Schreddergut anschliessend mit Lösungsmittel zu behandeln. Metallteile werden sodann von organischen Anteilen getrennt. Ein solches Verfahren bedarf jedoch zahlreicher technologisch anspruchsvoller Verfahrensschritte und ist daher unverhältnismässig aufwendig.

Ein weiterer Vorschlag bezieht sich auf ein Pyrolyseverfahren, bei dem der isolierölgetränkte Transformatorkern unter Luftabschluss in einem Pyrolyseofen aufgeheizt wird. Mit chlorierten Biphenylen getränkte organische Bestandteile werden hierbei pyrolytisch zersetzt und in einem Nachbrenner verbrannt. Bei diesem Verfahren kann jedoch zumindest in der Aufheizphase unzersetztes chloriertes Biphenyl in den Nachbrenner gelangen, wodurch die Gefahr von Dioxinbildung nicht auszuschliessen ist.

### KURZE DARSTELLUNG DER ERFINDUNG

Die Erfindung, wie sie in den Patentansprüchen 1, 8, 9 und 10 definiert ist, löst die Aufgabe, ein Verfahren und Vorrichtungen zur Durchführung dieses Verfahrens anzugeben, welche es ermöglichen, mit chlorierten organischen Verbindungen getränkte Bestandteile beliebiger Geräte in vergleichsweise kurzer Zeit und mit vergleichsweise einfacher und daher betriebssicherer Technologie zu entsorgen.

Das Verfahren und die Vorrichtungen nach der Erfindung zeichnen sich dadurch aus, dass es in technologisch einfach durchzuführenden Verfahrensschritten, wie thermische Freisetzung der chlorierten organischen Verbindungen, unter zumindest teilweiser Zersetzung der zu entsorgenden Gerätebestandteile und Abfangen des Chlors aus den freigesetzten Verbindungen mit einem Alkaliund/oder Erdalkalichloride liefernden Reaktionspartner, gelingt, schwer zugängliche Umweltgifte rasch und risikolos unschädlich zu machen.

### KURZE DARSTELLUNG DER ZEICHNUNG

Nachfolgend wird die Erfindung anhand von in der Zeichnung beschriebenen Ausführungsbeispielen näher erläutert. Hierbei zeigt:

Fig. 1 eine Vorrichtung zur Durchführung des erfindungsgemässen Verfahrens, bei der die zu entsorgenden Bestandteile in einer wässrigen, natriumhaltigen Lösung behandelt werden,

Fig. 2 eine Vorrichtung zur Durchführung des erfindungsgemässen Verfahrens, bei der die zu entsorgenden Bestandteile ausgegast und das dabei entstehende chlorhaltige Prozessgas in einer wässrigen Lösung von Natriumhydroxid ausgewaschen wird, und

Fig. 3 eine Vorrichtung zur Durchführung des erfindungsgemässen Verfahrens, bei der die zu entsorgenden Bestandteile ausgegast und das dabei entstehende chlorhaltige Prozessgas durch eine Schmelze von Natriumhydroxid geleitet wird.

Weg zur Ausführung der Erfindung

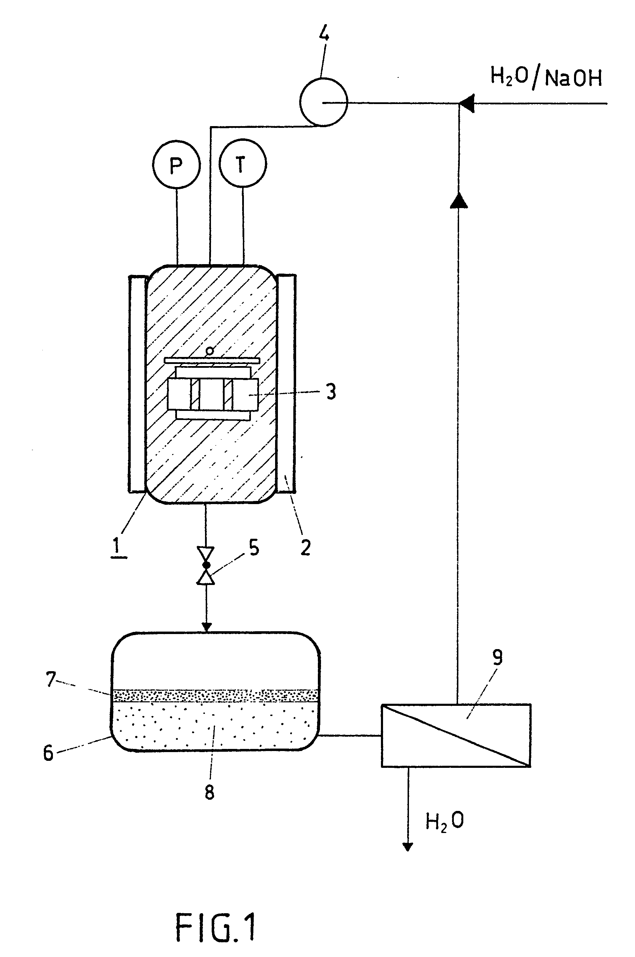

Bei der in Figur 1 dargestellten Vorrichtung bezeichnet 1 einen eine Heizung 2 aufweisenden Autoklaven mit einer Druck-p und einer Temperaturüberwachung T. Im Inneren des Autoklaven befindet sich ein Kern 3 eines mit einem Isolieröl etwa auf der Basis polychlorierter Biphenyle und/oder Trichlorbenzol gefüllten Transformators. Im Kern 3 befindet sich das nach Ablassen des Isolieröls in schwer zugänglichen Poren seiner organischen Bestandteile verbleibende restliche Isolieröl. Die Masse dieses Restöls kann bei einem 630 kV-Transformator mit beispielsweise 40 kg organischen, etwa Holz, Papier, Baumwolle und/oder Kunststoff umfassenden, Bestandteilen und etwa 400 kg Isolieröl ca. 10 kg betragen. Dem Autoklaven 1 wird über eine Pumpe 4 eine mit 5 - 50, vorzugsweise 10 - 20, bar Druck beaufschlagte, wässrige alkali- und/oder erdalkalihaltige Lösung zugeführt. Vorzugsweise enthält diese Lösung Hydroxide der Alkali- oder Erdalkalimetalle und kann etwa eine 10 %-ige Natronlauge sein. Die Lösung kann aber auch Salze der Alkali- und Erdalkalimetalle enthalten, wie etwa Natriumsulfit oder Natriumcarbonat.

Bei Temperaturen zwischen ca. 200 - 300, vorzugsweise 220 - 280, °C lösen sich nach wenigen Stunden die organischen Bestandteile des Kerns 3 auf und werden die chlorierten organischen Verbindungen, teilweise unter Zersetzung und gegebenenfalls unter Chlorabspaltung, selbst aus schwer zugänglichen Poren freigesetzt. Das in der Lösung befindliche ionisierte Alkali und/oder Erdalkali reagiert mit dem teilweise noch organisch gebundenen oder aber in Form von Salzsäure vorliegenden Chlor unter Bildung von Alkali- und/oder Erd alkalichlorid. Nach der nur wenige Stunden dauernden Behandlungszeit kann ein mit Alkali- und/oder Erdalkalichloriden, Kohlenwasserstoffen und wässriger Alkali- und/oder Erdalkaliausgangslösung angereicherter Dampfstrom über ein Reduzierventil 5 entnommen und einem Lagertank 6 zugeführt werden. Die Kohlenwasserstoffe setzen sich dort als leicht entfernbare Schicht 7 auf der Oberfläche des verbleibenden Rohwassers 8 ab. Das Rohwasser 8 kann nachfolgend etwa durch Nassoxidation, Ozon/UV-Behandlung, Destillation, Entsalzung oder biologische Behandlung in einem Wasseraufbereiter 9 an verbleibenden Kohlenwasserstoffen und Alkali- und/oder Erdalkalichloriden abgereichert werden. Es kann sodann abgenommen oder zur Aufbereitung der wässrigen Alkali- und/oder Erdkalilösung wieder in den beschriebenen Prozess eingeschleust werden.

Wenn nach mehreren Stunden alle isolierölgetränkten Bestandteile des Kerns 3 gelöst sind, wird der isolierölfreie, aber gegebenenfalls noch ungelöste, jedoch isolierölfreie Reste der Bestandteile sowie Lösungsreste enthaltende Autoklav 1 mit reinem Wasserdampf ausgewaschen. Nach dem Abkühlen kann der Kern 3 dann frei von chlorierten organischen Verbindungen dem Autoklaven entnommen werden.

Anstelle eines Transformatorkerns können auch isolierölgetränkte Bestandteile anderer elektrischer Geräte, beispielsweise Hochspannungskondensatoren, oder beliebige andere Geräte mit Bestandteilen, die mit chlorierten organischen Verbindungen getränkt sind, in entsprechender Weise entsorgt werden.

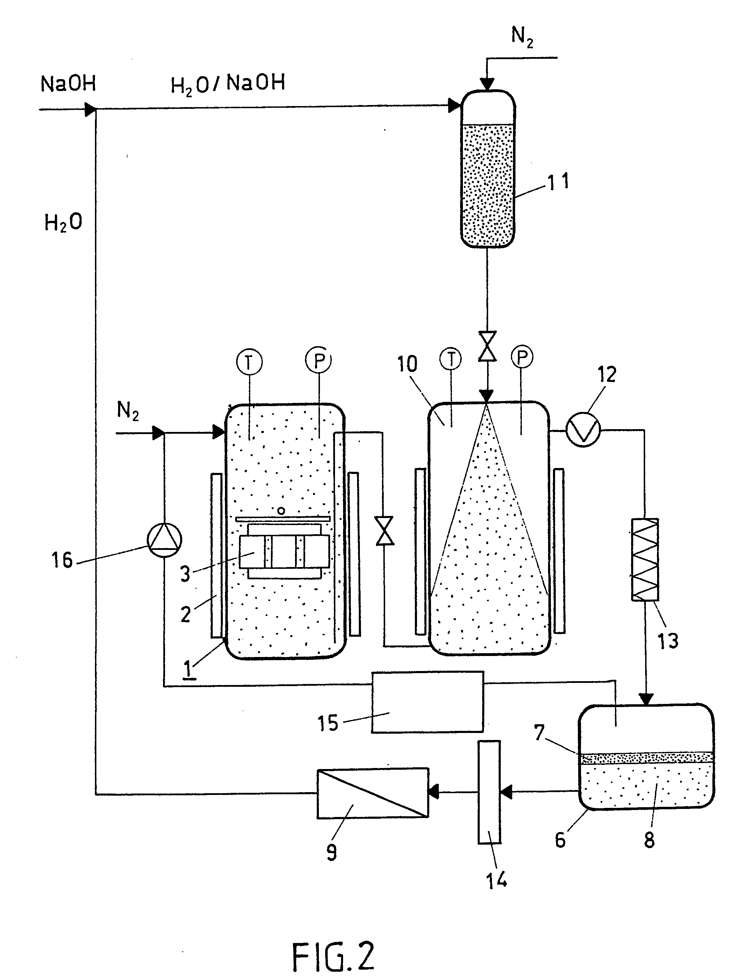

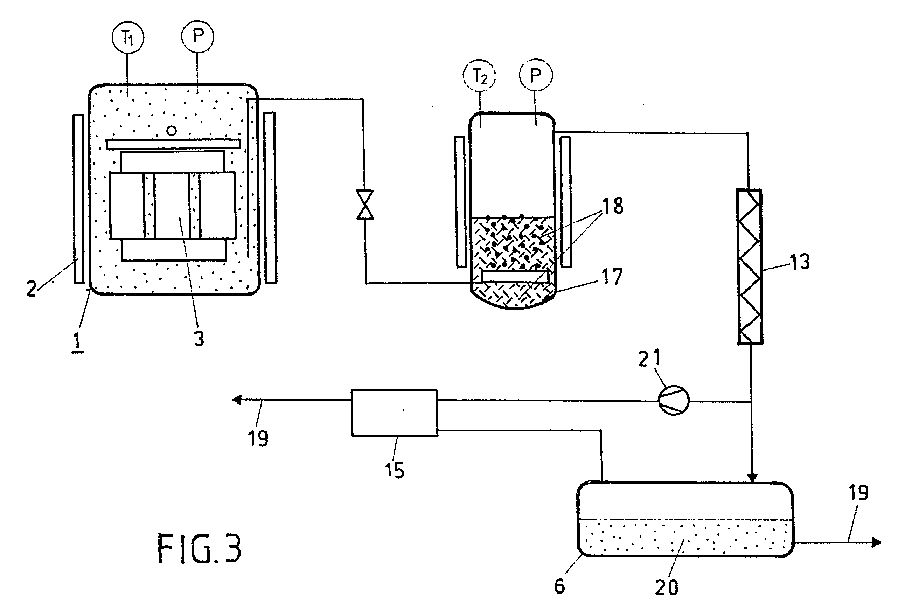

Bei den in den Figuren 2 und 3 dargestellten Ausführungsformen von Vorrichtungen zur Durchführung des erfindungsgemässen Verfahrens beziehen sich der Figur 1 entsprechende Bezugszeichen auf entsprechend der Figur 1 wirkende Teile. In der Vorrichtung gemäss Fig. 2 dient der Autoklav 1 dem Ausgasen des isolierölgetränkten Kerns 3. Durch Aufheizen auf ca. 300-600 °C vorzugsweise 350-450 °C, werden die isolieröl getränkten organischen Bestandteile des Kerns 3 unter Zufuhr eines inerten Trägergases, wie etwa Stickstoff, unter teilweiser Zersetzung ausgegast. Das hierbei gebildete, chlorierte und chlorfreie organische Verbindungen, Wasser, Chlorwasserstoff und Stickstoff aufweisende Prozessgas wird in einen auf ca. 200 - 300 °C aufgeheizten Gaswäscher 10 geführt. Bei einem Druck zwischen 0,5 und 10 bar wird aus einem mit einer wässrigen Alkali- und/oder Erdalkali-Lösung, beispielsweise mit 10 %-iger Natronlauge, gefüllten Vorratsbehälter 11 Flüssigkeit in den Gaswäscher 10 eingepresst. Hierbei wird das überwiegend in Form von Chlorwasserstoffgas, gegebenenfalls aber auch noch in Form chlorierter organischer Kohlenwasserstoffe, etwa als PCB, im Prozessgas befindliche Chlor unter Bildung von Alkali- und/oder Erdalkalichloriden gebunden. Der aus dem Gaswäscher 10 über ein Ueberströmventil 12 austretende Dampf enthält ausser Ueberschlussalkali- und/oder Erdalkali, Wasser und Alkali- und/oder Erdalkalichloriden nur noch nichtchlorierte organische Verbindungen und etwas Kohlendioxid. Der ausgetragene Dampf wird in einem Kühler 13 kondensiert und das im Kühler gebildete flüssige Kondensat in den Lagertank 6 geleitet, wo entsprechend der Vorrichtung gemäss Figur 1 die von chlorfreien Kohlenwasserstoffen gebildete Schicht 7 von der Oberfläche des Rohwassers 8 entfernt und das Rohwasser zur Weiterbehandlung in den Wasseraufbereiter 9 geführt wird. Hierbei kann es zweckmässig sein, gegebenenfalls im Rohwasser befindliche und bei vorstehend beschriebenem Prozess anfallende Feststoffteilchen durch ein zwischen Lagertank 6 und Wasseraufbereiter 9 vorgesehenes Filter 14 zu entfernen. Das in den Lagertank 6 geführte Trägergas wird, gegebenenfalls über eine dessen Bestandteile prüfende Analysevorrichtung 15 und eine Pumpe 16 wieder in den Autoklaven 1 geführt.

Das Verfahren gemäss Fig. 2 weist den zusätzlichen Vorteil auf, dass stets frisches Alkali bzw. Erdalkali in den Gaswäscher 10 eingetragen wird. Hierdurch wird mit Sicherheit erreicht, dass gegebenenfalls noch im Prozessgas befindliche und in den Gaswäscher 10 eingetragene chlorierte Kohlenwasserstoffe unter Bildung von Alkali- bzw. Erdalkalichlorid dechloriert werden. Zudem zeichnet sich dieses Verfahren bei grosser Betriebssicherheit durch eine grosse Durchlaufgeschwindigkeit aus.

In der Vorrichtung gemäss Fig. 3 wird entsprechend der Vorrichtung gemäss Fig. 2 überwiegend chlorfreie organische Verbindungen, Chlorwasserstoff, Wasser und Stickstoff enthaltendes Prozessgas gebildet. Das Prozessgas wird in einen heizbaren Reaktor 17 geleitet. Dieser Reaktor enthält eine Alkali und/oder Erdalkali aufweisende Schmelze 18. Bei Verwendung einer Natriumhydroxidschmelze ist er auf ca. 400 °C aufgeheizt. Das Prozessgas wird in den bodennahen Bereichen der Schmelze 18 eingeleitet. Das im Prozessgas enthaltene Chlor wird beim Aufsteigen des Prozessgases als Alkali- und/oder Erdalkalichlorid gebunden. Die verbleibenden Teile des Prozessgases, wie chlorfreie organische Verbindungen sowie Anteile an Kohlendioxid und Wasser , werden in den Kühler 13 geführt. Das hierbei gebildete Kondensat gelangt in den Lagertank 6. Nichtkondensierbare organische Kohlenwasserstoffe werden nach Ueberprüfung auf chlororganische Verbindungen in der Analysevorrichtung 15 einer Verbrennungsvorrichtung 19 zugeführt. Dieser Verbrennungsvorrichtung kann nach analytischem Nachweis der Unbedenklichkeit der gebildeten Kondensate gegebenenfalls auch der flüssige Kondensatanteil 20 zugeführt werden. Anstelle einer Schmelze kann im Reaktor 17 auch ein alkali-und/oder erdalkalihaltiger poröser Festkörper oder Granulat, etwa auf der Basis Kalziumoxid-Siliziumdioxid, verwendet werden.

Sowohl bei Verwendung eines solchen Reaktionspartners als auch bei Verwendung einer Schmelze als Reaktionspartner können die anfallenden Reaktionsprodukte besonders einfach auf Chlorfreiheit überwacht und entsorgt werden. Darüber hinaus kann hierbei der Druck sowohl im Autoklaven 1 als auch im Reaktor 17, etwa mittels einer hinter den Kühler 13 vorgesehenen Pumpe 21 beliebig eingestellt werden. Ist die Pumpe 21 vorgesehen, so entfällt die in Fig. 3 angegebene Verbindungsleitung zwischen Lagertank 6 und Analysevorrichtung 15. Durch Betriebsweise mit Unterdruck kann so in einfacher Weise erreicht werden, dass während des Prozesses mit Sicherheit keine chlorierten Kohlenwasserstoffe aus der Vorrichtung nach aussen treten können.

## Ansprüche

1. Verfahren zum Entfernen von chlorierte organische Verbindungen enthaltender Flüssigkeit aus einem Gerät durch Wärmebehandlung flüssigkeitsgetränkter Bestandteile dieses Gerätes, dadurch gekennzeichnet, dass die flüssigkeitsgetränkten Bestandteile bei der Wärmebehandlung zumindest teilweise zersetzt werden und hierbei ein zumindest Chlorwasserstoff und chlorierte organische Verbindungen enthaltendes Prozessprodukt freigesetzt wird, welches bei erhöhten Temperaturen einem Alkali- und/oder Erdalkalichlorid bildenden Reaktionspartner zugeführt wird.

2. Verfahren nach Anspruch 1, dadurch gekennzeichnet, dass der Reaktionspartner eine die flüssigkeitsgetränkten Bestandteile bei erhöhten Temperaturen zumindest teilweise zersetzende wässrige alkali- und/oder erdalkalihaltige Lösung ist.

3. Verfahren nach Anspruch 1, dadurch gekennzeichnet, dass die Chlorverbindungen durch Ausgasung freigesetzt werden, und dass das hierbei gebildete Prozessgas mit einer als Reaktionspartner Alkali und/oder Erdalkali enthaltenden wässrigen Lösung gewaschen wird.

4. Verfahren nach Anspruch 1, dadurch gekennzeichnet, dass die Chlorverbindungen durch Ausgasung freigesetzt werden, und dass das hierbei gebildete Prozessgas durch eine Alkali und/oder Erdalkali als Reaktionspartner enthaltende Schmelze geleitet wird.

5. Verfahren nach einem der Ansprüche 2 bis 4, dadurch gekennzeichnet, dass das Alkali und/oder Erdalkali in Form eines Hydroxids verwendet wird.

6. Verfahren nach Anspruch 1, dadurch gekennzeichnet, dass die Chlorverbindungen durch Ausgasung freigesetzt werden, und dass das hierbei gebildete Prozessgas durch einen Alkali und/oder Erdalkali als Reaktionspartner enthaltenden porösen oder aus Pulver oder Granulat gebildeten Festkörper geleitet wird.

7. Verfahren nach einem der Ansprüche 4 bis 6, dadurch gekennzeichnet, dass das Prozessgas auf Unterdruck gehalten wird.

8. Vorrichtung zur Durchführung des Verfahrens nach Anspruch 1 gekennzeichnet durch einen die flüssigkeitsgetränkten Bestandteile aufnehmenden und mit einer diese Bestandteile zumindest teilweise zersetzenden, alkali- und/oder erdalkalihaltigen Lösung gefüllten Autoklaven (1).

9. Vorrichtung zur Durchführung des Verfahrens nach Anspruch 1 gekennzeichnet durch einen die flüssigkeitsgetränkten Bestandteile aufnehmenden und chlorhaltige Verbindungen ententhaltendes Prozessgas erzeugenden Autoklaven (1) und einen dem Autoklaven (1) nachgeschalteten und Alkali und/oder Erdalkali enthaltenden Reaktor, welcher auf Temperaturen aufgeheizt ist, die die Bildung von Alkali-und/oder Erdalkalichlorid aus dem zugeführten Prozessgas und dem Alkali und/oder Erdalkali begünstigen.

10. Vorrichtung nach Anspruch 9, dadurch gekennzeichnet, dass der Reaktor ein Gaswäscher (10) mit einer Vorrichtung zum Eingeben einer alkali- und/oder erdalkalihaltigen Lösung ist.

11. Vorrichtung nach Anspruch 9, dadurch gekennzeichnet, dass der Reaktor eine alkali- und/oder erdalkalihaltige Schmelze, einen alkali- und/oder erdalkalihaltigen porösen Festkörper oder ein alkali- und/oder erdalkalihaltiges Pulver oder Granulat enthält.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 098 811 (DECOMAN) <br> * Zusammenfassung; Seite 5, Zeile 25 - Seite 6, Zeile 13; Figur 1 * <br> --- | 1,6 | A 62 D 3/00 <br> H 01 F 27/14 <br> B 01 D 53/34 |
| A,D | US-A-4 699 667 (WALSH) <br> * Zusammenfassung; Spalte 2, Zeilen 8-46,60-68 * <br> --- | 1,3 | |
| A | RGE - REVUE GENERALE DE L'ELECTRICITE, Nr. 8, September 1987, Seiten 156-162, Paris, FR; J.-P. GROO: "Destruction des PCB: procédés en cours de développement" <br> * Seite 156, rechte Spalte, letzter Absatz: "Les produits de recombinaison", usw. * <br> --- | 3 | |
| A | US-A-4 425 949 (ROWE) <br> * Spalte 4, Zeilen 58-68 * <br> --- | 1 | |
| A | US-A-4 301 137 (WILLIAMS) <br> * Spalte 2, Zeile 40 - Spalte 3, Zeile 15; Ansprüche; Figur * <br> --- | 1,5 | RECHERCHIERTE SACHGEBIETE (Int. Cl.5) <br><br> A 62 D <br> B 01 D <br> H 01 F |
| A | DE-A-3 615 027 (RADKE et al.) <br> * Zusammenfassung * <br> --- | 1 | |
| A | EP-A-0 166 934 (ROCKWELL INT.) <br> * Zusammenfassung * <br> --- | 4 | |
| A | EP-A-0 206 019 (KERNFORSCHUNGSANLAGE JÜLICH) <br> * Zusammenfassung * <br> ----- | 6 | |

Der vorliegende Recherchenbericht wurde für alle Patentansprüche erstellt

| Recherchenort | Abschlußdatum der Recherche | Prüfer |
|---|---|---|
| DEN HAAG | 22-12-1989 | KASPERS H.M.C. |